# EUROPEAN PATENT SPECIFICATION

(11) **EP 1 765 945 B1**
(45) Date of publication and mention of the grant of the patent: **31.10.2007**
(21) Application number: 05746785.4
(22) Date of filing: 10.05.2005
(51) Int. Cl.: C09D 167/00, C09D 133/00, C09D 133/06, C09D 5/02

(54) **METAL PACKAGING COATING CONTAINING 1,3,5-TRIAZINE CARBAMATE CROSSLINKER**
BESCHICHTUNG AUF EINER METALLVERPACKUNG MIT EINEM 1,3,5-TRIAZINCARBAMAT-VERNETZER
REVETEMENT D'EMBALLAGE METALLIQUE CONTENANT UN AGENT DE RETICULATION DE 1,3,5-TRIAZINE CARBAMATE

(30) Priority: 10.05.2004 US 842228
(43) Date of publication of application: 28.03.2007
(73) Proprietor: Valspar Sourcing, Inc., Minneapolis, MN 55415 (US)
(72) Inventor: JENKINS, Steven A., Oxfordshire OX28 5NH (GB); CHARLESTON, Alistair S., Edinburgh EH9 1BP (GB); MILLER, Garry G., Sandringham, Melbourne, VIC 3191 (AU)
(74) Representative: Vossius & Partner
(86) International application number: PCT/US2005/016303
(87) International publication number: WO 2005/111161

(56) References cited:
- EP-A- 0 812 867
- WO-A-01/40368
- WO-A-97/08235
- US-A- 5 593 735
- US-A- 5 596 047
- US-A1- 2003 100 626

## Description

Most two-piece beer and beverage containers made from tinplated steel are coated on the exterior with a basecoat that is partially decorated with ink but that is not over-varnished. Some of these containers are shaped at the top by a process known as spin-necking. In this process a spinning metal disc contacts the outside of the top of the container and deforms it by reducing the diameter into the shape hereinafter called the neck. A significant extension of the metal occurs during this process; consequently any exterior basecoat for such a process requires high degrees of flexibility and toughness.

In addition, as the container contains more metal mass at the base and due to the nature of the ovens used to cure the basecoat, the peak metal temperature of the container when passed through the oven is usually higher at the top of the container than on the base of the sidewall. Therefore, the basecoat is usually more highly cured in the area where it needs to be most flexible (i.e., the neck area) and less highly cured at the base, where it needs to be sufficiently hard to avoid damage in can to can contact. A coating with a good cure profile (i.e., one with a good cure at lower metal temperatures but yet still flexible and not over-cured at higher metal temperatures) is necessary.

In addition the basecoat for the exterior of such a container also preferably requires: good opacity/whiteness, good gloss and overprint ability, good application (particularly good flow out and a smooth surface free from defects), good abrasion resistance, low coefficient of friction, and good pasteurization resistance.

Unfortunately, at present, because of these requirements and the viscosity requirements necessary to achieve good application with current equipment, all current commercial basecoats for this process are solvent based. Due to environmental desires and regulations, there is a desire to introduce water-based basecoats for this process.

From the foregoing, it will be appreciated that what is needed in the art is a water-based basecoat for the aforementioned use. Such compositions and methods for preparing and using the same are disclosed and claimed herein.

In one embodiment, this invention relates to novel coating compositions for application to metal packaging. Preferred compositions contain: at least one crosslinkable base resin; a 1,3,5-triazine carbamate crosslinker (e.g., a trisalkoxycarbonylaminotriazine crosslinker); and a carrier system (e.g., a water-based carrier system). In more preferred embodiments, the base resin comprises a water-soluble or water-dispersible polyester comprising the salt of an acidic functional polymer and an amine; the 1,3,5-triazine carbamate crosslinker has the general formula 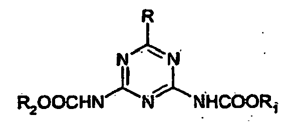 wherein R is NHCOOR₃, and wherein R₁, R₂ and R₃ are independently alkyls having 1 to 8 carbon atoms; and the carrier comprises water or water and one or more solvents (preferably water-miscible solvents).

The present invention provides improved water-based packaging coatings for use in spun-necked processes. Preferred coatings of the present invention comprise at least one crosslinkable base resin; a 1,3,5-triazine carbamate crosslinker; and a carrier system (e.g., a water-based carrier system).

Suitable crosslinkable base resins for use in the present invention include, for example, water-soluble or water-dispersible polyester resins. Examples of suitable such crosslinkable base resins include acidic functional polymers (e.g., carboxyl containing polyester resins) or anhydride functional polymers. These polymers preferably are present as amine salts. It is within the scope of the present invention to employ partially neutralized polymers (i.e., wherein only a portion of the acidic or anhydride functionality has been neutralized) or completely neutralized polymers. It is also within the scope of the present invention to use an excess of amine when neutralizing the polymer.

Other suitable crosslinkable base resins for use in the present invention include, for example, acrylic resins, acrylic graft polyesters, water-soluble and water-dispersible resins containing functional groups (e.g., hydroxyl groups) capable of reacting with the crosslinkers of the present invention, etc.

Suitable crosslinkable base resins (e.g., carboxyl containing polyester resins) for use in the present invention include crosslinkable base resins having an acid number between 40 and 60. The acid number (as used in reference to the present compositions) is the number of milligrams of potassium hydroxide required to neutralize one gram of the solid crosslinkable base resin. The acid number of an anhydride-containing resin is determined by initially hydrolyzing the anhydride-containing resin to obtain the corresponding polyacid polymer. The acid number is then determined in the same manner as for a polyacid polymer. The acid number of a salt compound may be determined as the number for a like acid compound that has not been converted to the salt.

Typically, the crosslinkable base resin (e.g., carboxyl containing polyester resin) has a hydroxyl value between 20 and 120 (mEq KOH/g), more preferably between 40 and 100, and most preferably between 40 and 70. The hydroxyl number of a hydroxyl-containing polymer of the present invention is determined by: (i) esterifying the polymer with acetic anhydride and pyridine to obtain an esterified polymer and acetic acid; and (ii) then neutralizing the acetic acid with potassium hydroxide. The units are expressed similarly to acid number, i.e., the number of milligrams of potassium hydroxide required to neutralize the acetic acid formed as described above per one gram of hydroxyl-containing polymer.

The crosslinkable base resin preferably has a molecular weight suitable for the desired application. For example, the molecular weight should be sufficiently low to enable proper flow of the coating composition. In addition, the molecular weight should be sufficiently high such that the coating composition may be cured to give the desired properties (preferably without the need for an excess amount of additional crosslinker). For water-soluble systems the crosslinkable base resin suitably has a number average molecular weight between about 600 and 3,500, preferably has a number average molecular weight between 800 and 3,000, more preferably between 800 and 2,800, and most preferably between 1,500 and 2,500. For water-dispersible systems it is contemplated that higher molecular weight crosslinkable base resins may be utilized.

In addition to the previously mentioned crosslinkable base resin, coating compositions of the present invention may further comprise one or more additional resins. For example, it is believed that suitable packaging coating compositions may be prepared using an additional resin such as polyurethanes, alkyd resins, acrylic resins or modified epoxies. The choice of whether to include an additional resin (and the amount, if any, of such additional resin) is dictated by a variety of factors, such as the desired end use of the coating, the particular requirements for the desired coating, etc.

The coatings of the present invention comprise at least one crosslinker. Suitable crosslinkers for use in the present invention include 1,3,5-triazine carbamates (e.g., trisalkoxycarbonylaminotriazine crosslinker). By "1,3,5-triazine carbamate" is meant a compound based on one or more 1,3,5-triazine cores having on average at least two carbamate groups attached to such core or cores. Such 1,3,5-triazine carbamates and methods for preparing the same are known, for example, from U.S. Pat. Nos. 4,939,213; 5,084,541; 5,288,865; 5,596,047; 5,556,971; and 5,574,103; EP-A-0624577; EP-A-0649842; WO96/04258; and WO096/11915.

Preferred for use in the present invention are those 1,3,5-triazine carbamates of the following general formula, as well as oligomers thereof: 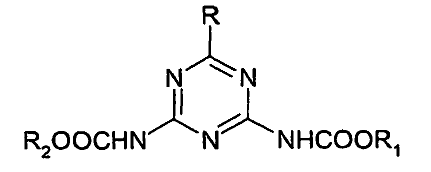 wherein R is selected from the group consisting of: NHCOOR₃, hydrogen, hydrocarbyl, hydrocarbyloxy, hydrocarbylthio, amido, sulfonamido, amino, hydrocarbylamino, dihydrocarbylamino and cyclic amino; and wherein each R₁, R₂ and R₃ is independently selected from the group consisting of hydrocarbyl and hydrocarbyloxyhydrocarbyl. The term "hydrocarbyl" in the context of the present invention, and in the above formula, is a group that contains carbon and hydrogen atoms and includes, for example, alkyl, aryl, aralkyl, alkenyl, and substituted derivatives thereof.

In the more preferred embodiments, R is selected from the group consisting of --NHCOOR₃ ; hydrogen; a hydrocarbyl group having from I to 20 carbon atoms such as alkyl (e.g., methyl and butyl), cycloalkyl (e.g., cyclohexyl), alkenyl (e.g., vinyl), aryl (e.g. phenyl), aralkyl (e.g., benzyl) and the like; a hydrocarbyloxy group having 1 to 20 carbon atoms such as alkoxy (e.g., methoxy), aryloxy (e.g., phenoxy) and the like; hydrocarbylthio groups having 1 to 20 carbon atoms such as methylthio, phenylthio and the like; amido groups such as acetamido; sulfonamido groups such as benzenesulfonamido; an amino group (e.g., --NH₂); hydrocarbylamino groups having 1 to 20 carbon atoms such as methylamino, butylamino and the like; dihydrocarbylamino groups having 2 to 40 carbon atoms such as dimethylamino; and cyclic amino groups such as pyrrolidino, piperidino, morpholino, azepino and the like. Crosslinkers wherein R is --NHCOOR₃ are especially preferred.

Preferred R₁, R₂ and R₃ groups include, for example, hydrocarbyl groups having 1 to 20 carbon atoms such as alkyl (e.g., methyl and butyl), cycloalkyl (e.g., cyclohexyl), alkenyl (e.g., vinyl), aryl (e.g. phenyl), aralkyl (e.g., benzyl) and the like; and hydrocarbyloxyhydrocarbyl groups having 2 to 40 carbon atoms with the hydrocarbyl group being as described above. Further, these groups may also have a substituent such as a halogen atom, a cyano group, a sulfoxide group, a sulfone group, a carbonyl group, an ester group and an amide group. Mixtures of the above are also suitable.

More preferred R₁, R₂ and R₃ groups include aliphatic alkyls and alkenyls having 1 to 8 carbon atoms, cyclic alkyls and alkenyls having 4 to 12 carbon atoms, alkoxyalkyls having 2 to 16 carbon atoms, and aryl and alkaryls having 6 to 18 carbon atoms, as well as mixtures thereof. Specific preferred examples include methyl, ethyl, propyl, n-butyl, i-butyl, t-butyl, pentyl, hexyl, cyclohexyl, heptyl, octyl, ethylhexyl, allyl, ethoxyethyl, 1-methoxy-2-propyl, phenyl, 2-methylphenyl, 3-methylphenyl, 4-methylphenyl, dimethylphenyls, 2-chlorophenyl, 3-chlorophenyl, 4-chlorophenyl and mixtures thereof.

Especially preferred 1,3,5-triazine carbamate crosslinkers for use in this invention are those of the above formula wherein R is NHCOOR₃, and wherein R₁, R₂ and R₃ are independently alkyls having 1 to 8 carbon atoms, and particularly methyl and/or butyl, which includes which includes tris-(butoxycarbonylamino)-1,3,5-triazine, tris-(methoxycarbonylamino)-1,3,5-triazine and tris-(methoxybutoxycarbonylamino)-1,3,5-triazine. A preferred example includes 1,3,5-triazine carbamate crosslinkers having a methyl to butyl molar ratio in the range of from about 0.50 to about 1.5 (as determined by Nuclear Magnetic Resonance (NMR) spectroscopy), and particularly those having methyl to butyl ratios in the range of from about 0.65 to about 1.2.

These 1,3,5-triazine carbamates may be prepared, for example, by the methods described in U.S. Pat. Nos. 4,939,213, 5,084,541, and 5,288,865, EP-A-0604922, EP-A-0624577, EP-A-0649842, WO95/30663, WO96/04258, WO96/11915 and WO96/15185.

The amount of crosslinker to use in a given formulation will depend upon a variety of factors. Typically the composition will comprise between up to 5, preferably between 0.5 and 4, more preferably between 1 and 3, and most preferably between 1.5 and 2.5 % by weight of the crosslinker. If desired, the crosslinker may be added to the composition as a dispersion or solution in a carrier (e.g., as a 50% solution in butanol). In such cases the weight of the carrier is not included in the aforementioned weight ranges.

In addition, compositions of the present invention may optionally comprise a co-crosslinker such as an aminoplast resin (e.g., melamine-formaldehyde resins, benzoguanamines, urea-formaldehyde resins, glycourils, etc.) and blocked polyisocyanates.

The coatings of the present invention comprise a suitable carrier system. Preferably, the carrier system is water-based, e.g., the carrier system comprises water or water and one or more co-carriers (preferably water-miscible co-carriers). Suitable co-carriers include water-miscible co-carriers such as BUTYL CELLOSOLVE (ethylene glycol monobutyl ether), BUTYL CARBITOL (diethylene glycol monobutyl ether), tri-decanol, butylcarbitol acetate, butanol, mono- or di-alkyl ethers of ethylene or propylene glycols and polyglycols and their alkyl esters (e.g., acetates), isopropanol, acetone, etc.

If desired, the coatings of the present invention may optionally comprise suitable additives. For example, the coating may optionally comprise one or more pigments, dyes, lubricants, surface tension modifiers, catalysts (e.g., acid, Lewis acid and base catalysts), etc.

In one embodiment, the coating composition of the present invention is applied to a beverage can according to the following general procedure: An uncoated two-piece beverage can (e.g., a 33 cl two-piece beverage can made of tinplate and of diameter 2.6875 inches (also referred to as "211 " or 6.8263 cm)), is coated (e.g., roller-coated) with the coating composition of the present invention. The coating is baked at suitable temperature to cause the coating to cure (e.g., at an air temperature of between about 170 to 230 °C for between about 10 and 60 seconds (more preferably between 210 to 220 °C for about 50 seconds and giving a peak metal temperature (PMT) of between about 210 and 220 °C at the neck and between about 188 and 199 °C at the base)). A coating having a dry film weight of between about 10 and 20 gm/m² is preferably obtained (more preferably about 14 gm/m²). Decorative inks may then be applied and the can baked again, e.g., under the conditions described above. A three stage process combining die, pre-spin and spin-neck flange stages preferably reduces the diameter in the neck area to 2.125 inches ("202" or 5.3975 cm). The can is then re-baked (e.g., through two internal bake ovens (IBO) each at an air temperature of 225 °C for 2 minutes).

The following examples are offered to aid in understanding of the present invention and are not to be construed as limiting the scope thereof. Unless otherwise indicated, all parts and percentages are by weight.

### EXAMPLES

### Example 1

### Water-Reducible Polyester

To a suitable reactor (equipped with a mechanical stirrer, inert gas sparge inlet, packed column, condenser, and distillate removal apparatus) were charged components 1 through 4 as listed below in Table 1. After heating to 130 °C, components 5 through 8 were charged, and the mixture was heated to 150 °C to begin distillation of water. The pot temperature was gradually increased to 240 °C, maintaining a head temperature of 100 °C or slightly below throughout. Reaction temperature was held at 240 °C until an acid value of about 5 to 7 was achieved. The contents were cooled to 170 °C, and component 9 was added. The pot temperature was increased to 190 °C and held until an acid value of about 40 to 45 was achieved. At this point the temperature was reduced to 170 °C and component 10 was added. The temperature was then lowered and when it fell below 150 °C, component 11 was added and solids were adjusted to 66-68%.

| **Table 1** | | |
|---|---|---|
| **Component** | **Description** | **Weight (Parts)** |
| 1 | Neopentyl glycol | 235.39 |
| 2 | Ethylene glycol | 21.66 |
| 3 | 1,6-Hexanediol | 22.38 |
| 4 | DBTDL | 0.63 |
| 5 | Isophthalic acid | 147.49 |
| 6 | Terephthalic acid | 55.68 |
| 7 | Adipic acid | 55.16 |
| 8 | Phthalic anhydride | 80.84 |
| 9 | Trimellitic anhydride | 75.03 |
| 10 | Diethylene glycol monobutyl ether acetate | 50.00 |
| 11 | Ethylene glycol monobutyl ether | 255.74 |

### Example 2

### Acrylic Dispersion

In a suitable reaction vessel equipped with a mechanical stirrer, inert gas inlet, and condenser, component 1 (as listed in Table 2) was charged and heated to 136°C under an inert gas blanket. Components 2 through 6 were premixed and uniformly added over 4 hours to the vessel while maintaining the temperature at between 136 and 140°C. The monomer addition vessel was rinsed with component 7, and temperature was maintained at between 136 and 140°C for 1 hour. The resulting solution polymer was cooled to 80°C, at which time a premix of components 8 and 9 was added over 30 minutes. After 15 minutes agitation, component 10 was added to yield the acrylic dispersion at 50 to 53% nonvolatile weight and a pH of between about 7.5 and 8.0.

| **Table2** | | |
|---|---|---|
| **Component** | **Description** | **Weight (Parts)** |
| 1 | Ethylene glycol monobutyl ether | 133.87 |
| 2 | Methyl methacrylate | 154.34 |
| 3 | n-Butyl acrylate | 216.16 |
| 4 | Glacial acrylic acid | 48.49 |
| 5 | 2-Hydroxyethyl acrylate | 22.02 |
| 6 | t-Butyl perbenzoate | 17.58 |
| 7 | Ethylene glycol monobutyl ether | 20.00 |
| 8 | Dimethylethanolamine | 48.10 |
| 9 | Deionized water | 96.20 |
| 10 | Deionized water | 183.53 |

### Example 3

### White Basecoat Composition

A white waterborne coating was prepared from the components listed in Table 3.

| **Table 3** | | |
|---|---|---|
| **Component** | **Description** | **Parts By Weight** |
| GRIND | | |
| 1 | Polyester from Resin Example 1 | 14.74 |
| 2 | Dimethylethanolamine | 0.35 |
| 3 | Ethylene glycol monobutyl ether | 1.96 |
| 4 | Dehydran® 671¹ | 0.07 |
| 5 | Byk® 141² | 0.20 |
| 6 | Shamrock SST3P³ | 0.28 |
| 7 | Tiona RCL-9 TiO₂⁴ | 24.98 |
| 8 | Ethylene glycol monobutyl ether | 0.68 |

| LETDOWN | | |
|---|---|---|
| 9 | Polyester from Resin Example 1 | 13.45 |
| 10 | Dimethylethanolamine | 1.48 |
| 11 | Tridecanol | 0.74 |
| 12 | Cymel® 1123⁵ | 5.82 |
| 13 | Cylink® 2000⁶ | 3.59 |
| 14 | Acrylic from Resin Example 2 | 3.93 |
| 15 | Resydrol® AX247W⁷ | 2.95 |
| 16 | Ethylene glycol monobutyl ether | 7.22 |
| 17 | Deionized water | 11.47 |

| POST-ADD | | |
|---|---|---|
| 18 | Deionized water | 4.40 |
| 19 | Lubaprint® CA30⁸ | 1.69 |
| | TOTAL | 100.00 |

| | | |
|---|---|---|
| ¹ Defoamer (23.5% solids) available from Henkel-Nopco. ² Defoamer (3% solids) available from Cognis. ³ PTFE lubricant (100% solids) available from Shamrock. ⁴ Rutile TiO₂ pigment available from Millenium. ⁵ Benzoguanamine Resin (100% solids) available from Cytec Industries. ⁶ Trisalkoxycarbonylaminotriazine crosslinker available from Cytec Industries. ⁷ Polyol (70% solids) available from Solutia. ⁸ Carnauba emulsion (30% solids) available from LP Bader. | | |

The white waterborne coating may be prepared according to the following exemplary procedures:
Grind: Using a suitable vessel, components 1 to 6 are added and blended. Once homogeneous, the titanium dioxide is added and dispersed using a sawtooth disperser, e.g., a Sussmeyer disperser. After the required dispersion is obtained component 8 is added to wash down the sides of the vessel.
Let-down: In a separate vessel to the grind, components 9 to 16 are added and blended after each component addition.

The grind is then added to the let-down and mixed thoroughly. Component 17 is then added to the combined grind and let-down and the contents are further mixed. Finally, components 18 and 19 are pre-blended and added to the vessel. The coating is then adjusted to a viscosity of 60-80 secs (as measured using a #4 Ford Cup at 25°C) using, if necessary, more of component 16. The pH also may be adjusted, if necessary, to a value of about 8 to 8.5 using component 10.

Curing Procedure A: The white waterborne coating may then be applied to a substrate according to the following exemplary procedure: An uncoated 33 cl two-piece beverage can, made of tinplate and of diameter 2.6875 inches (" 211" or 6.8263 cm), is roller-coated with the coating compound of Ex.3. The coating is baked once at an air temperature of 210 to 220 °C for 50 seconds (giving a peak metal temperature (PMT) of between about 210 and 220 °C at the neck and between about 188 and 199 °C at the base). A coating having a dry film weight of 14gm/m² is obtained. Decorative inks are then applied and the can is baked again under the same conditions as described above. A three stage process combining die, pre-spin and spin-neck flange stages preferably reduces the diameter in the neck area to 2.125 inches ("202" or 5.3975 cm). The can is then re-baked through two internal bake ovens (IBO) each at an air temperature of 225 °C for 2 minutes.

Curing Procedure B: For internal testing purposes, the white waterborne coating may be applied to a test substrate according to the following procedure: An uncoated tinplate two-piece beverage can has its base removed and edges trimmed. The sides are then flattened and leveled out to provide test substrate pieces. Using a suitable wire-wound applicator bar the coating is applied over the tinplate test substrate and stoved at an air temperature of 210 °C for 50 seconds. This stoving cycle generally mimics the stoving an actual can would experience in the neck area. A coating having a dry film weight of 14 gm/m² is obtained. A simulated decorative ink stoving of 210 °C for 50 seconds is applied and two internal bake oven (IBO) stovings, are simulated by stoving the panels at an air temperature of 225 °C for 4 minutes.

Curing Procedure C: For internal testing purposes, the white waterborne coating may be applied to a test substrate according to the following procedure: An uncoated tinplate two-piece beverage can has its base removed and edges trimmed. The sides are then flattened and leveled out to provide test substrate pieces. Using a suitable wire-wound applicator bar the coating is applied over the tinplate test substrate and stoved at an air temperature of 180 °C for 50 seconds to mimic the stoving at the lower sidewall of the can (i.e., 5 mm above the base). A coating having a dry film weight of 14 gm/m² is obtained. A simulated decorative ink stoving of 210 °C for 50 seconds is applied and two internal bake oven (IBO) stovings, are simulated by stoving the panels at an air temperature of 225 °C for 4 minutes.

### Example 4

### Testing/Results

Test substrates were coated with the composition of Ex. 3 and cured according to Curing Procedure B or C or as indicated. The test results on the resultant coating are listed in Table 4.

| **Table 4** | | | | |
|---|---|---|---|---|
| **Test** | **Curing Procedure** | **Comp. Ex. 1 *** | **Ex. 3** | **Comp. Ex. 2 **** |
| 202 Spin-neck capability¹ | B | Good | Good | Poor |
| MEK resistance at low PMT (180°C/50secs)² | C | 4 | 4 | 1 |
| MEK resistance at high PMT (210°C/50secs)³ | B | 50+ | 50+ | 50+ |
| MEK resistance after 2x IBO⁴ | B | 50+ | 50+ | 50+ |
| Pasteurization resistance⁵ | B | Good | Good | Good |
| Drawn flexibility at high PMT⁶ | B | Very good | Good | Average |
| Adhesion ⁷ | B | 0% fail | 0% fail | 0% fail |
| Opacity/whiteness⁸ | B | Good | Good | Good |
| Gloss⁹ | B | 80-90 | 80-90 | 80-90 |
| Application¹⁰ | B | Good | Good | Good |
| Coefficient of friction at coater¹¹ | B | 0.04-0.05 | 0.04-0.05 | 0.04-0.05 |
| VOC g/l, less water¹² | -- | 590 | 414 | 375 |

| | | | | |
|---|---|---|---|---|
| Notes for Table 4: * Standard solvent based composition available from Valspar as No. M 17855. ** Water based composition without the crosslinker of the present invention. ¹ The basecoat and decorative ink is applied and stoved as per Curing Procedure B. The can is then spin pre-necked using a CMB 170 machine and then given two Internal Bake Oven (IBO) stovings as per Curing Procedure B and is visually assessed for damage. ² MEK resistance of the basecoat using a clean saturated wiper. Result is given in double rubs. ³ MEK resistance of the basecoat using a clean saturated wiper. Result is given in double rubs. ⁴ MEK resistance of the basecoat plus decoration after two IBO stovings each of 225°C/2mins using a clean saturated wiper. Result is given in double rubs. ⁵ Basecoat panels cross-hatched and pasteurized for 30 minutes at 80°C in solutions of (i) water and (ii) disodium hydrogen orthophosphate dihydrate 0.06% in water. ⁶ Flat panels were coated with basecoat and stoved at an air temperature of 210 °C for 50 seconds and then coated with decorative ink and stoved at an air temperature of 210 °C for 50 seconds. Screw-cap first blanks were drawn to specified depth using a fly press and given a further two IBO stovings each of 225 °C/2mins. The blanks were examined for adhesion failure. ⁷ Crosshatch adhesion test results are quoted as percentage adhesion loss. ⁸ Opacity measured as a relationship with film weight using the Micropac Opacity. Tester from Sheen Instruments. Measured after the coater stoving (and without any decorative ink). ⁹ Gloss measured at a 60° angle of incidence using the Micropac Gloss Tester from Sheen Instruments. Measured after the coater stoving (and without any decorative ink). ¹⁰ Application to flat panels using a laboratory simulation of the roller coater application process. ¹¹ Coefficient of friction measured using an Altek Mobility Tester. Measured after the coater stoving (and without any decorative ink). ¹² Measurement of the volatile organic content (VOC) of a basecoat quoted as 'grams per liter of coating less water.' | | | | |

## Claims

1. A coating composition for application to metal packaging, containing:
at least one crosslinkable base resin, wherein the base resin comprises a salt of a carboxyl containing polyester resin and an amine; and wherein the base resin has an acid number between 40 and 60;
a 1,3,5-triaxine carbamate crosslinker; and
a water-based carrier system.

2. The coating composition of Claim 1, wherein the crosslinkable base resin has a hydroxyl value between 20 and 120.

3. The coating composition of Claim 1, wherein the crosslinkable base resin has a hydroxyl value between 60 and 80.

4. The coating composition of Claim 1, wherein the crosslinkable base resin has a number average molecular weight between. 600 and 3,000.

5. The coating composition of Claim 1, wherein the coating composition further comprises one or more additives selected from the group consisting of: pigments, dyes, lubricants, surface tension modifiers, and catalysts.

6. The coating composition of Claim 1, wherein the coating composition further comprises an additional resin selected from the group consisting of: polyurethanes, alkyd resin, acrylic resin and modified epoxy resin.

7. The coating composition of Claim 1, wherein the composition comprises up to 5 % by weight of the crosslinker.

8. The coating composition of Claim 1, wherein the composition comprises between 1 and 3 % by weight of the crosslinker.

9. The coating composition of Claim. 1., wherein, the crosslinker has the general formula 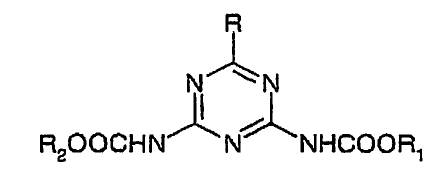 wherein R is NHCOOR₃, and wherein R₁, R₂ and R₃ are independently alkyls having 1 to 8 carbon atoms.

10. The coating composition of Claim 1, wherein the crosslinker is selected from the group consisting of tris-(butoxycarbonylamino)-1,3,5-triazine, tris-(methoxycarbonylamino)-1,3,5-triazine and tris-(methoxybutoxycarbonylamino)-1,3,5-triazine.

11. The coating composition of Claim 1, wherein the coating composition further comprises a co-crosslinker.

12. A method of coating a container, comprising the steps of:
providing a uncoated can;
coating the can with the coating composition of claim 1;
baking the coated can;
applying decorative ink to the coated can;
baking the decorated can;
spin-necking the can to reduce the neck diameter of the can; and
baking the necked can.

13. The method of claim 12, wherein the coating composition is roller coated onto a two-piece beverage can.

14. The method of claim 12, wherein the coated can is baked at an air temperature of between about 170 to 230 °C for between about 10 and 60 seconds to achieve a coating having a dried film weight of between 10 and 20 gm/m².

15. The method of claim 12, wherein the coated can is baked to a peak metal temperature of between about 210 and 220 °C at the neck and between about 188 and 199 °C at the base to achieve a coating having a dried film weight of between 10 and 20 gm/m².

16. A container coated with the composition of claim 1.

## Patentansprüche

1. Beschichtungszusammensetzung zum Aufbringen auf eine Metallverpackung, enthaltend:
mindestens ein vernetzbares Grundharz, wobei das Grundharz ein Salz eines Carboxylgruppen enthaltenden Polyesterharzes und ein Amin umfasst; und wobei das Grundharz eine Säurezahl zwischen 40 und 60 aufweist;
einen 1,3,5-Triazincarbamat-Vernetzer; und
ein Trägersystem auf Wasserbasis.

2. Beschichtungszusammensetzung nach Anspruch 1, wobei das vernetzbare Grundharz eine Hydroxylzahl zwischen 20 und 120 aufweist.

3. Beschichtungszusammensetzung nach Anspruch 1, wobei das vernetzbare Grundharz eine Hydroxylzahl zwischen 60 und 80 aufweist.

4. Beschichtungszusammensetzung nach Anspruch 1, wobei das vernetzbare Grundharz ein Zahlenmittel des Molekulargewichts zwischen 600 und 3000 aufweist.

5. Beschichtungszusammensetzung nach Anspruch 1, wobei die Beschichtungszusammensetzung weiter ein oder mehrere Additive, ausgewählt aus Pigmenten, Farbstoffen, Gleitmitteln, Oberflächenspannungsmodifikatoren und Katalysatoren, umfasst.

6. Beschichtungszusammensetzung nach Anspruch 1, wobei die Beschichtungszusammensetzung weiter ein zusätzliches Harz, ausgewählt aus Polyurethanen, Alkydharz, Acrylharz und modifiziertem Epoxyharz, umfasst.

7. Beschichtungszusammensetzung nach Anspruch 1, wobei die Zusammensetzung bis zu 5 Gew.-% des Vernetzers umfasst.

8. Beschichtungszusammensetzung nach Anspruch 1, wobei die Zusammensetzung zwischen 1 und 3 Gew.-% des Vernetzers umfasst.

9. Beschichtungszusammensetzung nach Anspruch 1, wobei der Vernetzer die allgemeine Formel 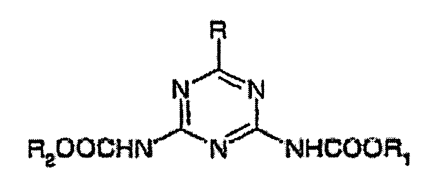 aufweist, wobei R für NHCOOR₃ steht und wobei R₁, R₂ und R₃ unabhängig Alkylreste mit 1 bis 8 Kohlenstoffatomen sind.

10. Beschichtungszusammensetzung nach Anspruch 1, wobei der Vernetzer aus Tris-(butoxycarbonylamino)-1,3,5-triazin, Tris-(methoxycarbonylamino)-1,3,5-triazin und Tris-(methoxybutoxycarbonylamino)-1,3,5-triazin ausgewählt ist.

11. Beschichtungszusammensetzung nach Anspruch 1, wobei die Beschichtungszusammensetzung weiter einen Co-Vernetzer umfasst.

12. Verfahren zum Beschichten eines Behälters, umfassend die Schritte:
Bereitstellen einer unbeschichteten Dose;
Beschichten der Dose mit der Beschichtungszusammensetzung nach Anspruch 1;
Erhitzen der beschichteten Dose;
Aufbringen einer dekorativen Farbe auf die beschichtete Dose;
Erhitzen der dekorierten Dose;
Spin-Necking der Dose, um den Halsdurchmesser der Dose zu verjüngen; und
Erhitzen der verjüngten Dose.

13. Verfahren nach Anspruch 12, wobei die Beschichtungszusammensetzung auf eine Getränkedose aus zwei Teilen durch Walzauftrag aufgebracht wird.

14. Verfahren nach Anspruch 12, wobei die beschichtete Dose bei einer Lufttemperatur zwischen etwa 170 bis 230°C zwischen etwa 10 und 60 Sekunden erhitzt wird, um eine Beschichtung mit einem Trockenfilmgewicht zwischen 10 und 20 g/m² zu erzielen.

15. Verfahren nach Anspruch 12, wobei die beschichtete Dose auf eine Metall-Spitzentemperatur zwischen etwa 210 und 220°C am Hals und zwischen etwa 188 und 199°C am Boden erhitzt wird, um eine Beschichtung mit einem Trockenfilmgewicht zwischen 10 und 20 g/m² zu erzielen.

16. Behälter, beschichtet mit der Zusammensetzung nach Anspruch 1.

## Revendications

1. Composition de revêtement destinée à être appliquée à un emballage métallique, contenant :
au moins une résine de base réticulable, où la résine de base comprend un sel d'une résine de polyester contenant des carboxyles et une amine ; et où la résine de base a un indice d'acide entre 40 et 60 ;
un réticulant 1,3,5-triazine carbamate ; et
un système de support à base d'eau.

2. Composition de revêtement selon la revendication 1, où la résine de base réticulable a un indice d'hydroxyle entre 20 et 120.

3. Composition de revêtement selon la revendication 1, où la résine de base réticulable a un indice d'hydroxyle entre 60 et 80.

4. Composition de revêtement selon la revendication 1, où la résine de base réticulable a une masse moléculaire moyenne en nombre entre 600 et 3000.

5. Composition de revêtement selon la revendication 1, où la composition de revêtement comprend en outre un ou plusieurs additifs choisis dans le groupe consistant en : les pigments, les colorants, les lubrifiants, les agents modifiant la tension superficielle, et les catalyseurs.

6. Composition de revêtement selon la revendication 1, où la composition de revêtement comprend en outre une résine additionnelle choisie dans le groupe consistant en : les polyuréthanes, les résines alkydes, les résines acryliques et les résines époxydes modifiées.

7. Composition de revêtement selon la revendication 1, où la composition comprend jusqu'à 5% en masse de réticulant.

8. Composition de revêtement selon la revendication 1, où la composition comprend entre 1 et 3% en masse de réticulant.

9. Composition de revêtement selon la revendication 1, où le réticulant a la formule générale 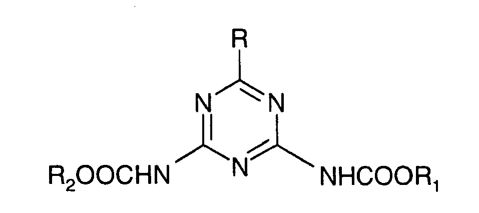 où R est NHCOOR₃, et où R₁, R₂ et R₃ sont indépendamment des alkyles ayant 1 à 8 atomes de carbone.

10. Composition de revêtement selon la revendication 1, où le réticulant est choisi dans le groupe consistant en la tris-(butoxycarbonylamino)-1,3,5-triazine, la tris-(méthoxycarbonylamino)-1,3,5-triazine et la tris-(méthoxybutoxycarbonylamino)-1,3,5-triazine.

11. Composition de revêtement selon la revendication 1, où la composition de revêtement comprend en outre un co-réticulant.

12. Procédé de revêtement d'un récipient comprenant les étapes de :
fournir une boîte non revêtue ;
revêtir la boîte avec la composition de revêtement selon la revendication 1 ;
cuire la boîte revêtue ;
appliquer une encre décorative à la boîte revêtue ;
cuire la boîte décorée ;
étrangler à rotation la boîte pour réduire le diamètre du col de la boîte ; et
cuire la boîte munie d'un col.

13. Procédé selon la revendication 12, où la composition de revêtement est appliquée au rouleau sur une boîte à boisson en deux parties.

14. Procédé selon la revendication 12, où la boîte revêtue est cuite à une température de l'air entre environ 170 et 230°C pendant environ 10 à 60 secondes pour obtenir un revêtement ayant une masse de film séché entre 10 et 20 g/m².

15. Procédé selon la revendication 12, où la boîte revêtue est cuite jusqu'à une température maximale du métal entre environ 210 et 220°C au col et entre environ 188 et 199°C à la base pour obtenir un revêtement ayant une masse de film séché entre 10 et 20 g/m².

16. Récipient revêtu de la composition selon la revendication 1.
